# EUROPÄISCHE PATENTANMELDUNG

(11) **EP 4 818 659 A1**
(43) Veröffentlichungstag der Anmeldung: **07.10.2026**
(21) Anmeldenummer: 26167955.9
(22) Anmeldetag: 26.03.2026
(51) Int. Cl.: G01K 7/42, G01K 17/20, G01N 25/00, G01N 33/00, F24F 11/00

(54) **VERFAHREN ZUR ERMITTLUNG DES SCHIMMELBILDUNGSRISIKOS IN GEBÄUDEN**

(30) Priorität: 01.04.2025 DE 102025112786
(71) Anmelder: Techem Energy Services GmbH, 65760 Eschborn (DE)
(72) Erfinder: Ghebru, Daniel, 60528 Frankfurt a. M. (DE); Vollmari, Kevin, 60438 Frankfurt a. M. (DE); Bidna, Tetiana, 60326 Frankfurt a. M. (DE)
(74) Vertreter: 2K Patent Partnerschaft mbB

(57) **Zusammenfassung**

Ein Verfahren (1) zur Ermittlung des Schimmelbildungsrisikos in Gebäuden, soll eine zuverlässige Prävention von Schimmel mit einfachen technischen Mitteln erlauben. Dazu werden eine in einem Raum des Gebäudes gemessene Raumtemperatur sowie relative und/oder absolute Raumluftfeuchtigkeit bereitgestellt; aus der gemessenen Raumtemperatur, der relativen und/oder absoluten Raumluftfeuchtigkeit und einer Anzahl von Umgebungs- und/oder Gebäudeparametern mittels eines bereitgestellten Modells ermittelt wird, ob ein kritischer Zustand für die Schimmelbildung erreicht ist (12).

## Beschreibung

Die Erfindung betrifft ein Verfahren zur Ermittlung des Schimmelbildungsrisikos in Gebäuden.

Liegen geeignete Umgebungsbedingungen vor (insbesondere hinsichtlich Temperatur und Luftfeuchte), kann es zu Schimmelbildung an Oberflächen in Gebäuden kommen. Schimmelpilze und deren Sporen können zu gesundheitlichen Beeinträchtigungen bei Personen, die sich in befallenen Räumen aufhalten, führen. Auch Schäden an der Bausubstanz können durch Schimmelpilze verursacht werden.

Grundsätzlich lässt sich durch eine geeignete Gebäudedämmung das Schimmelpilzentstehungsrisiko deutlich senken, diese Maßnahme ist jedoch technisch aufwändig und kostenintensiv und daher nicht für alle Gebäude geeignet. Selbiges gilt für den Einbau von Heizgewebe in den Wandoberflächen. Auch ein Anstrich mit schimmelhemmender Farbe (z.B. Farbe auf Kalk- oder Silikatbasis) ist insbesondere in vermieteten Wohnungen mit großem Aufwand verbunden. Zusätzlich sind diese speziellen Farben schwierig in der Anwendung und nicht für alle Oberflächen geeignet.

Eine Vielzahl von Maßnahmen zur Schimmelbildungsprävention zielt daher in Richtung einer konsequenten Luftfeuchtereduktion durch regelmäßiges Lüften. Das Lüften hat jedoch einen nicht unerheblichen Wärmeverlust zur Folge, so dass aus energetischen Gründen das Lüften nur gezielt durchgeführt werden sollte. Messungen mit einfachen Thermo-Hygrometern können dabei Ansatzpunkte für Lüftungsempfehlungen geben, dies ist jedoch dadurch beschränkt, dass kritische Punkte etwa an Außen- und Innenwänden nicht beachtet werden.

Gerade diese kritischen Punkte erfordern jedoch besondere Aufmerksamkeit. Spezielle Messgeräte, die die Luftfeuchte in unmittelbare Nähe der Wand aufzeichnen ("Schimmelwächter") können genau auf solchen kritischen Stellen angebracht werden. Hierfür ist jedoch Wissen über die Position dieser Stellen notwendig, welches ggf. nicht vorhanden ist, oder eine Vielzahl von Messgeräten, um umfassenden Schutz zu gewährleisten.

Alternativ gibt es auch Thermo-Hygrometer mit Kommunikationsfähigkeit, die im Verbund mit Heizungs- und Lüftungsteuerungen aktiv für ein besseres Raumklima sorgen können. Der Fokus liegt hierbei jedoch nicht auf der Schimmelprävention, sondern auf der Behaglichkeit der Bewohner. Für eine effektive Schimmelprävention sind die Messwerte daher nur bedingt geeignet, da die Raumluft nur an einem Punkt gemessen wird, der von den kritischen Punkten des Raumes abweichen kann.

Abgesehen von den existierenden Endgeräten und Maßnahmen gibt es eine Reihe von Schimmelbildungsvorhersagemodellen. Neben den Raumtemperatur- und relativen Luftfeuchtigkeitsmesswerten sind das Material und die Beschaffenheit der Gebäudewände häufig entscheidend für diese Modelle. Dies explizit zu beschreiben ist in der Praxis kompliziert und nicht wirtschaftlich umsetzbar.

Es ist daher Aufgabe der Erfindung, ein Verfahren zur Ermittlung des Schimmelbildungsrisikos in Gebäuden, welches eine zuverlässige Prävention von Schimmel mit einfachen technischen Mitteln erlaubt.

Diese Aufgabe wird erfindungsgemäß gelöst, indem eine in einem Raum des Gebäudes gemessene Raumtemperatur sowie relative und/oder absolute Raumluftfeuchtigkeit bereitgestellt werden; aus der gemessenen Raumtemperatur, der relativen und/oder absoluten Luftfeuchtigkeit und einer Anzahl von Umgebungs- und/oder Gebäudeparametern eine mittels eines bereitgestellten Modells ermittelt wird, ob ein kritischer Zustand für die Schimmelbildung erreicht ist.

Die Erfindung geht dabei von der Überlegung aus, dass für die Vorhersage des Schimmelrisikos neben der aktuellen Raumfeuchtigkeit insbesondere die innenliegende Wandoberflächentemperatur relevant ist. Diese wird maßgeblich durch den Energieverlust des Gebäudes bestimmt, und ist damit über Umgebungs- und/oder Gebäudeparametern mit der aktuellen Raumtemperatur verknüpft. Berücksichtigt man derartige Umgebungs- und/oder Gebäudeparameter, kann dann mittels eines geeigneten Modells das Risiko für die Schimmelbildung ermittelt werden.

Vorteilhafterweise wird dabei zunächst aus der gemessenen Raumtemperatur, der relativen und/oder absoluten Raumluftfeuchtigkeit und der Anzahl von Umgebungs- und/oder Gebäudeparametern eine innenliegende Wandoberflächentemperatur ermittelt wird; und aus der ermittelten innenliegenden Wandoberflächentemperatur und der gemessenen relativen und/oder absoluten Raumluftfeuchtigkeit mittels des bereitgestellten Modells ermittelt wird, ob ein kritischer Zustand für die Schimmelbildung erreicht ist.

Vorteilhafterweise wird dabei als Zwischenschritt zur Ermittlung der innenliegenden Wandoberflächentemperatur aus der Anzahl von Umgebungs- und/oder Gebäudeparametern ein Gesamtwärmedurchgangskoeffizient für das Gebäude ermittelt. Dieser ist charakteristisch für den Energieverbrauch des Gebäudes und bezeichnet den flächenspezifischen Verlustwärmestrom pro Kelvin Temperaturdifferenz (angegeben in W). Dieser Gesamtwärmedurchgangskoeffizient wird anschließend vorteilhafterweise um einen Korrekturfaktor für Lüftungsverluste korrigiert, so dass nur noch der tatsächliche Transmissionsanteil verbleibt, d.h. derjenige Anteil, der tatsächlich auf Wärmetransmission durch die Außenwände beruht. Sodann wird vorteilhafterweise die innenliegende Wandoberflächentemperatur zumindest aus der gemessenen Raumtemperatur, der aktuellen Außentemperatur und dem korrigierten Gesamtwärmedurchgangskoeffizienten ermittelt.

In vorteilhafter Ausgestaltung des Verfahrens umfassen die Umgebungsparameter eines oder mehrere der Folgenden:
- Außentemperatur,
- relative Außenluftfeuchtigkeit,
- aktuelle und/oder voraussichtliche Wetterlage,
- Gradtagszahlen,
- Heizgradtage,
- Solareinstrahlung,
- Windgeschwindigkeit.

Hierbei sollten vorteilhafterweise nicht nur die aktuellen Werte dieser Parameter, sondern insbesondere auch historische Datensätze und Prognosen wie z.B. Wettervorhersagen verwendet werden. Dies bietet einen zusätzlichen Vorteil gegenüber z.B. herkömmlichen einfachen Thermo-Hydrometern oder "Schimmelwächtern", die gerade keine historischen Daten und Wettervorhersagen bzw. lokale Witterungsbedingungen berücksichtigen. Durch die Verwendung früherer und zukünftiger prognostizierter Parameter sowohl im Rahmen der Ermittlung des korrigierten Gesamtwärmedurchgangskoeffizienten also als zusätzlicher Eingangsparameter des Modells spiegelt die Lüftungsempfehlung nicht nur eine Momentaufnahme des Innenraumzustandes wieder, sondern gewährleistet eine nachhaltige, zukunftsorientierte Prognose.

Die Gebäudeparameter umfassen vorteilhafterweise eines oder mehrere der Folgenden:
- Energieverbrauch,
- spezifischer Energieverbrauch,
- Energieeffizienzklasse,
- Nutzungsgrad,
- Art des Wärmeerzeugers,
- Maß für die Gebäudekompaktheit,
- Größe der Grundfläche,
- Größe der Außenwandfläche,
- Größe der Dachfläche,
- Gebäudealter,
- Anzahl der Etagen,
- Größe der beheizten Fläche,
- Wandstärke,
- Raumtyp.

Von ganz besonderem Vorteil ist die Verwendung historischer Daten der Umgebungsparameter dabei bei der Ermittlung des Gesamtwärmedurchgangskoeffizienten für das Gebäude. Hierbei werden insbesondere auch noch die historischen Raumlufttemperaturdaten verwendet sowie die genannten Gebäudeparameter verwendet. Hierdurch ergibt sich eine besonders genaue Abschätzung des Gesamtwärmedurchgangskoeffizienten.

Das für die Ermittlung des Vorliegens eines kritischen Zustands bereitgestellte Modell ist vorteilhafterweise ein Machine-Learning-, Deep-Learning-, heuristisches, physikalisches, mathematisches, kennfeldbasiertes Modell oder eine Kombination aus einer Anzahl der vorgenannten Modelle.

Vorteilhafterweise verwendet das bereitgestellte Modell bei der Ermittlung, ob der kritische Zustand für die Schimmelbildung erreicht ist, aktuelle und historische Werte der innenliegenden Wandoberflächentemperatur und der gemessenen relativen Raumluftfeuchtigkeit. Da die Keimzeiten je nach Luftfeuchtigkeit und Temperatur unterschiedlich sind, erlaubt die Berücksichtigung der Dauer verschiedener Zustände eine besonders präzise Vorhersage. So kann eine nur gering erhöhte Luftfeuchtigkeit bei entsprechender Dauer auch zu einem kritischen Zustand führen. Die Ermittlung eines kritischen Zustands erfolgt somit vorteilhafterweise nicht nur anhand aktueller Daten, sondern kann auch Kriterien wie Kritikalität (Höhe der Wahrscheinlichkeit für Schimmelbildung), Haltezeit und Hysterese einbeziehen.

Die aktuellen und/oder historischen Werte der innenliegenden Wandoberflächentemperatur umfassen dabei vorteilhafterweise auch direkt gemessene Temperaturen. Diese können z.B. durch Kontakt oder ein berührungsloses Verfahren gemessen werden. Entweder können diese durch Messung an einem kritischen Punkt (kältester Punkt der Innenwand) die Vorhersagequalität verbessern oder als weiterer Eingangsparameter dienen, um das Modell zu präzisieren.

Wenn durch das Modell tatsächlich ein kritischer Zustand hinsichtlich der Schimmelbildung ermittelt wird, wird vorteilhafterweise eine Warnmeldung an einen Benutzer erzeugt und/oder es erfolgt ein automatischer Eingriff auf Technik des Gebäudes mit dem Ziel der Beseitigung des kritischen Zustands erfolgt. Ein derartiger automatischer Eingriff auf Technik des Gebäudes kann z.B. durch smarte Thermostate, Regelung einer aktiven Lüftung im Raum oder Eingriff auf die Heizungsreglereinstellungen der Wärmeerzeugungsanlage erfolgen. Dieser kann auch der Warnmeldung an den Benutzer nachgeschaltet sein, so dass z.B. ein automatischer Eingriff erfolgt, wenn eine Bestätigung durch den Benutzer ausbleibt.

Hinsichtlich des Benutzers kann die Warnmeldung vorteilhafterweise über ein Benutzerendgerät wie z.B. ein Mobiltelefon (via einer entsprechenden App) und/oder ein im Raum angeordnetes Messgerät für die Raumtemperatur und/oder die relative Raumluftfeuchtigkeit ausgegeben werden. Beispielsweise kann ein akustisches oder optisches Signal an dem im Raum befindlichen kommunikativen Thermo-Hygrometer ausgegeben werden.

Die Schritte der Ermittlung der innenliegenden Wandoberflächentemperatur und der Ermittlung, ob ein kritischer Zustand für die Schimmelbildung erreicht ist, werden vorteilhafterweise in einem zum Gebäude entfernten Rechenzentrum durchgeführt. Dies kann ein dediziertes Rechenzentrum für diesen Zweck sein, oder aber die entsprechenden Verfahrensschritte werden cloudbasiert durchgeführt.

Die mit der Erfindung erzielten Vorteile liegen insbesondere darin, dass durch Ermittlung der innenliegenden Wandtemperatur und deren Verwendung in einem Modell zur Ermittlung eines kritischen Zustandes eine frühzeitige Einschätzung des Schimmelpilzkeimungs- und wachstumsrisikos ermöglicht wird. Sollte ein solcher Zustand vorliegen, erfolgt automatisiert eine Versendung einer Empfehlung zur Beseitigung des kritischen Zustandes. Alternativ kann ein direkter Zugriff auf die Gebäudetechnik (z. B. auf Smarte Thermostate, Lüftungssysteme, Wärmeerzeugungsanlage) erfolgen. Das Verfahren ermöglicht nachhaltige Lüftungs- und Heizempfehlungen unter Berücksichtigung der lokalen Witterungsbedingungen. Zusätzlich ist es sogar möglich, eine Sanierungsempfehlung unter Berücksichtigung der Messwerte aus allen Nutzeinheiten einer Liegenschaft zu generieren.

Gegenüber bestehenden Verfahren bietet das vorgeschlagene Verfahren eine erhöhte Sicherheit in Bezug auf Schimmelprävention durch den Einbezug von Gebäude- und Umgebungsparametern und zum anderen Energieeinsparpotenziale durch optimierte Heiz- und Lüftungsempfehlungen und oder - eingriffe. Darüber hinaus werden die tatsächlichen Umgebungsbedingungen (z. B. Umgebungstemperatur, relative und absolute Luftfeuchtigkeit der Umgebungsluft) einbezogen. Da die Berechnung zentral in einer Cloud erfolgen kann, ist es zudem möglich Wetterprognosen einzubinden. In Kombination mit den zu erwarteten Bedingungen in dem Gebäude erlaubt die Zusammenführung der relevanten Daten eine Prognose zum Schimmelkeimbildungs- und -wachstumspotenzial. Es kann von großem Vorteil sein, dass potenziell kritische Zustände frühestmöglich zu erkennen, um gegensteuern zu können. Beispiele für gegensteuernde Maßnahmen sind bereits oben beschrieben und können sowohl nutzerinduziert oder durch eine technische Apparatur automatisiert erfolgen.

Mit Mustererkennungsverfahren auf Sensor-Ebene, Nutzeinheiten-Ebene (mehrere Sensoren), Liegenschafts-Ebene (mehrere Nutzeinheiten) oder Portfolio-Ebene (mehrere Liegenschaften) kann u. a. auf Periodizitäten, Verhaltensmuster oder weitere Ursachen geschlossen werden, die in eine oder mehrere Handlungsempfehlungen überführt werden können. Dies kann sich von Lüftungs- und Heizungsempfehlungen über Sanierungsempfehlungen erstrecken.

Auf Grund von Feuchtigkeitseintrag in geschlossenen Räumen beispielsweise durch sich darin aufhaltende Personen, sanitäre Anlagen wie Duschen oder durch Wasserdampf beim Kochen kann die relative Feuchte stark ansteigen. In einem Drei-Personenhaushalt kann die tägliche Feuchtelast über 10 Liter pro Tag erreichen. Liegen zusätzlich niedrige Außentemperaturen vor, kann es zu Kondensation an den Wänden kommen. Liegt diese Kombination von Feuchte und Temperatur über längere Zeit an der Wandoberfläche vor, können Schimmelpilze keimen und wachsen. Schimmelpilze und ihre Sporen stellen dabei ein nicht unerhebliches Gesundheitsrisiko dar und können weiterhin die Gebäudesubstanz schädigen. Die Entfernung ist aufwendig und nicht immer dauerhaft erfolgreich, daher sollte die Entstehung von Schimmelpilzen so gut es geht verhindert werden. Die vorliegende Erfindung bietet dabei eine Möglichkeit zur Schimmelprävention über Lüftungs- und Heizempfehlungen und oder - eingriffe, die niedriginvestiv und für alle Gebäudetypen geeignet ist. Hierzu werden die von einem kommunikativen Thermo-Hygrometer gemessene

Ausführungsbeispiele der Erfindung werden im Folgenden anhand von Zeichnungen näher erläutert. Darin zeigen:
- FIG 1: ein Diagramm eines Verfahrens zur Ermittlung des Schimmelbildungsrisikos in Gebäuden;
- FIG 2: ein Temperatur-Feuchtigkeitsdiagramm mit Messwerten der Raumtemperatur und der Raumfeuchtigkeit; und
- FIG 3-7: Temperatur-Feuchtigkeitsdiagramme mit mittels des Verfahrens ermittelten Werte für die innenliegende Wandtemperatur für Gebäude verschiedener Energieklassen.

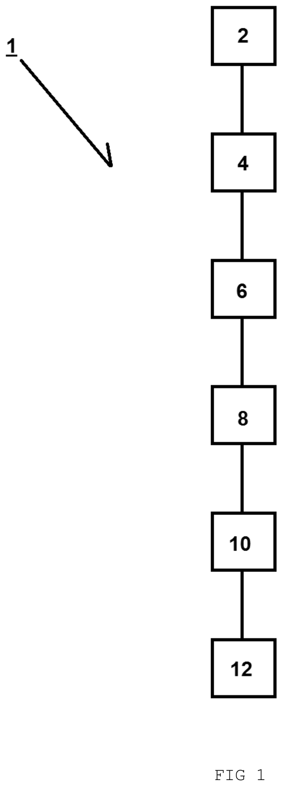

Das in FIG 1 schematisch dargestellte Verfahren 1 zur Ermittlung des Schimmelbildungsrisikos in Gebäuden nutzt den Energieverbrauch des jeweiligen Gebäudes zusammen mit Umgebungs- und Gebäudeparametern, um den Transmissionsanteil des Gesamtwärmeverlustkoeffizienten zu ermitteln. Mit einer aus den aktuellen Raumlufttemperaturen berechneten Gebäuderaumtemperatur, der aktuellen Außentemperatur, und dem korrigierten Gesamtwärmedurchgangskoeffizienten wird mit der Formel für Wärmedurchgang durch eine ebene Wand die innenliegende Wandoberflächentemperatur berechnet. Die berechnete innenliegende Wandoberflächentemperatur und die vom Thermo-Hygrometer gemessene aktuelle relative Luftfeuchtigkeit sind dabei Eingangsparameter eines Modells, welches die vorliegenden Zustände bzgl. Schimmelkeimung und - wachstum bewertet und zwischen kritischen und nichtkritischen Zuständen unterscheidet.

Ein kritischer Zustand ist dadurch gekennzeichnet, dass die Wahrscheinlichkeit hoch ist, dass auf der Innenseite einer Wand eine Kombination von Temperatur und relativer Luftfeuchte über einen längeren, für die Zusammenwirkung der gegebenen Faktoren angemessenen Zeitraum vorliegt, die hinsichtlich Schimmelpilzkeimung und -wachstum als günstig anzusehen ist. Das Modell kann also z.B. eine Wahrscheinlichkeit für die Schimmelbildung ermitteln, und ein Grenzwert für die Wahrscheinlichkeit unterscheidet dann in kritische und unkritische Zustände. Die Zustandsfolge kann dabei als Zeitreihe analysiert werden.

Konkret umfasst das Verfahren 1 gemäß FIG 1 in einem Ausführungsbeispiel der Erfindung folgende Schritte.

Als grundlegende zeitlich veränderliche Eingangsdaten werden in jedem Raum des Gebäudes sowohl Raumlufttemperaturen als auch die relative Luftfeuchtigkeit der Raumluft gemessen 2. Die gemessenen vorgenannten Daten werden nach abgeschlossener Messung an ein Rechenzentrum oder in die Cloud übertragen 4. Die Übertragung kann dabei auf direktem Wege oder indirekt über ein oder mehrere Geräte erfolgen. Das Rechenzentrum oder die Cloud können die Messdaten eindeutig einem Gebäude zuordnen, z.B. über geeignete Identifikationsmarker in den Daten oder durch den Sendepunkt.

Im nächsten Schritt wird der Gesamtwärmedurchgangskoeffizient für das Gebäude ermittelt 6. Hierzu stehen dem Verfahren 1 im Rechenzentrum oder in der Cloud Umgebungsparameter (Außentemperatur, relative Außenluftfeuchtigkeit, Wetterlage, Gradtagszahlen, Heizgradtage, Solareinstrahlung, Windgeschwindigkeit) zur Verfügung, auf die aufgrund der Geodaten des Gebäudes zurückgegriffen werden kann. Dies kann z. B. über einen Cloud-Wetterservice mit hoher Verfügbarkeit erfolgen. Weiterhin stehen dem Verfahren 1 Gebäudeparameter (Energieverbrauch, Energieeffizienzklasse, Nutzungsgrad, Art des Wärmeerzeugers, Maß für die Gebäudekompaktheit, Größe der Grundfläche, Größe der Außenwandfläche, Größe der Dachfläche, Gebäudealter, Anzahl der Etagen, Größe der beheizten Fläche, Wandstärke, Raumtyp) zur Verfügung.

Im Rahmen der Ermittlung 6 des Gesamtwärmedurchgangskoeffizienten wird aus den gemessenen Raumlufttemperaturen sowie weiteren Annahmen zunächst eine mittlere Gebäuderaumlufttemperatur T_{Gebäude} berechnet. In einer alternativen Ausführungsform des Verfahrens kann auch eine Annahme zur mittleren Gebäudetemperatur getroffen werden, z.B. im ersten Jahr nach Gerätinstallation. Im Anschluss wird die Temperaturdifferenz mittlere Gebäuderaumluftemperatur T_{Gebäude} - Umgebungstemperatur T_{Umg} berechnet. Hieraus wird dann der Energieeintrag ins Gebäude unter Annahme eines typischen Wirkungsgrades und dem Energieverbrauch berechnet. Alternativ werden Daten aus installierten Wärmemengenzählern für die Berechnung herangezogen.

Der Gesamtwärmedurchgangskoeffizient, definiert als der Transmissionsanteil des Gesamtwärmeverlustkoeffienten Uₜᵣₐₙₛ des Gebäudes wird somit aus dem zuvor bestimmten Energieverbrauch des Gebäudes, der Temperaturdifferenz zwischen Außen und Innen und der Gebäudehüllfläche ermittelt 6.

Im Folgenden wird der Gesamtwärmedurchgangskoeffizient um einen Korrekturfaktor für Lüftungsverluste korrigiert 8. Dieser sogenannte Infiltrationsanteil U_{inf} wird aus den Stoffparametern für Luft, Raumhöhe, Luftwechselrate und der Gebäudenutzfläche und -hüllfläche bestimmt. Der korrigierte Gesamtwärmedurchgangskoeffizient ergibt sich dann als U_{ges} = Uₜᵣₐₙₛ - U_{inf} berechnet

Aus der Gleichung für Wärmetransport durch eine ebene Wand wird nun unter Annahme eines Wärmeübergangskoeffizienten, der aktuellen mittleren Gebäuderaumluftemperatur, Umgebungstemperatur und des korrigierten Gesamtwärmeverlustkoeffizienten U_{ges} die innenseitige Wandoberflächentemperatur T_{wi} ermittelt 10.

Dabei kann durch Prognosen für die Außentemperatur z. B. durch Wetterdienste unter Annahme einer konstanten Innentemperatur die zukünftige Entwicklung von T_{wi} abgeschätzt werden. Alternativ oder zusätzlich kann auch durch weitere Temperaturfühler auf der Wandinnenseite die Wandoberflächentemperatur pro Raum gemessen werden.

Die berechnete innenliegende Wandoberflächentemperatur T_{wi} und die vom Thermo-Hygrometer gemessene aktuelle relative Luftfeuchtigkeit phi sind dabei Eingangsparameter eines Modells M(T_{wi}, phi), welches die vorliegenden Zustände bzgl. Schimmelkeimung und -wachstum anhand von Kriterien wie beispielsweise Kritikalität, Haltezeit, Hysterese etc. überprüft. Anhand von Dauer, Stärke, Periodizität etc. der vorliegenden Bedingungen wird im Rahmen des Modells ermittelt 12, ob eine kritische Situation erreicht ist, d.h. ob ein kritischer Zustand erreicht ist.

Wird ein kritischer Zustand festgestellt, wird eine Empfehlung an den Bewohner/Nutzer oder eine sich im Raum aufhaltende Person ggf. unter Einbezug von Umgebungsdaten bzgl. des Heiz- und Lüftungsverhaltens gegeben. Dies kann über optische oder akustische Signale am im Raum befindlichen kommunikativen Thermo-Hygrometer erfolgen oder als Nachricht an Endgeräte wie Smartphones, PCs oder eine andere Nutzerschnittstelle geschickt werden. Wurden Wetterprognosen in die Berechnung mit einbezogen, kann die Empfehlung auch in der Zukunft liegen.

Alternativ kann auch ein direkter Eingriff auf die Gebäudetechnik erfolgen, z. B. auf Smarte Thermostate, Regelung einer aktiven Lüftung im Raum, Eingriff auf die Heizungsreglereinstellungen der Wärmeerzeugungsanlage. Unter Einbezug von Wetterprognosen können diese Empfehlungen oder Eingriffe optimiert und Energieverluste minimiert werden.

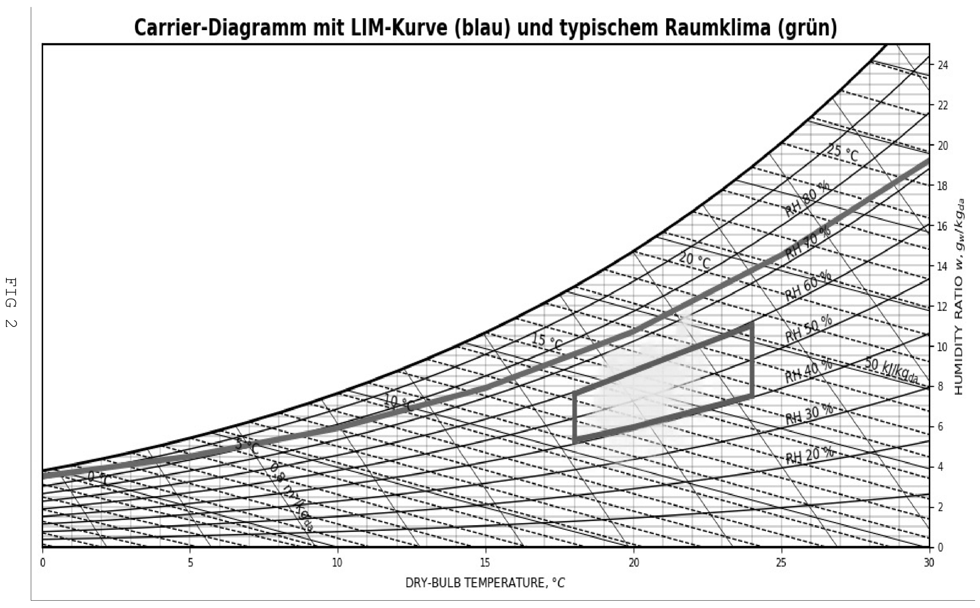

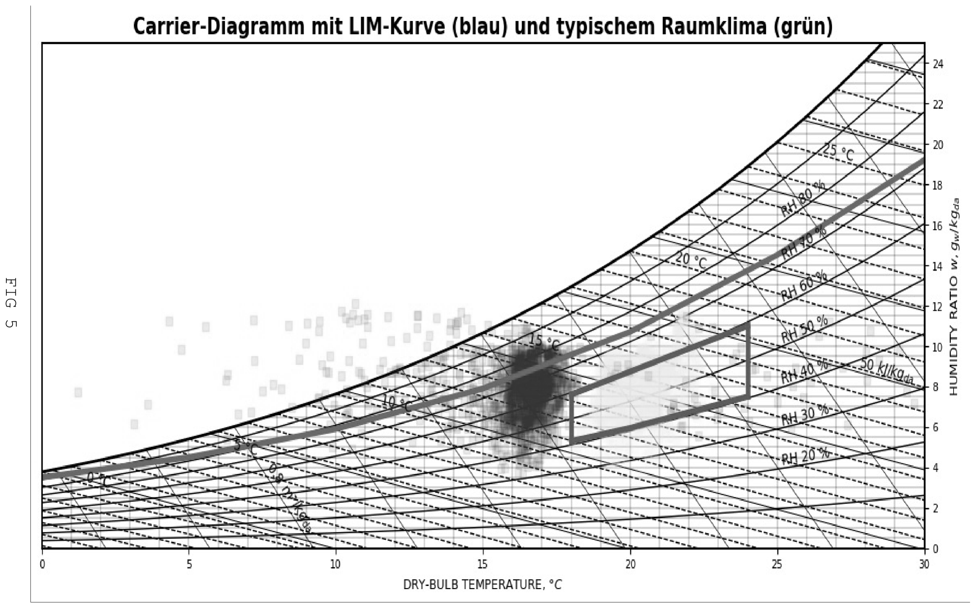

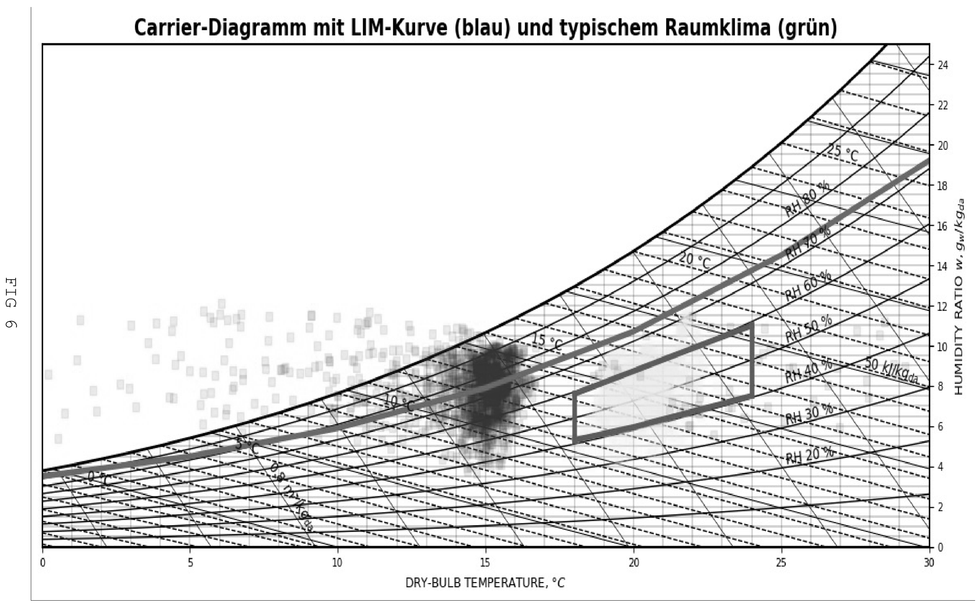

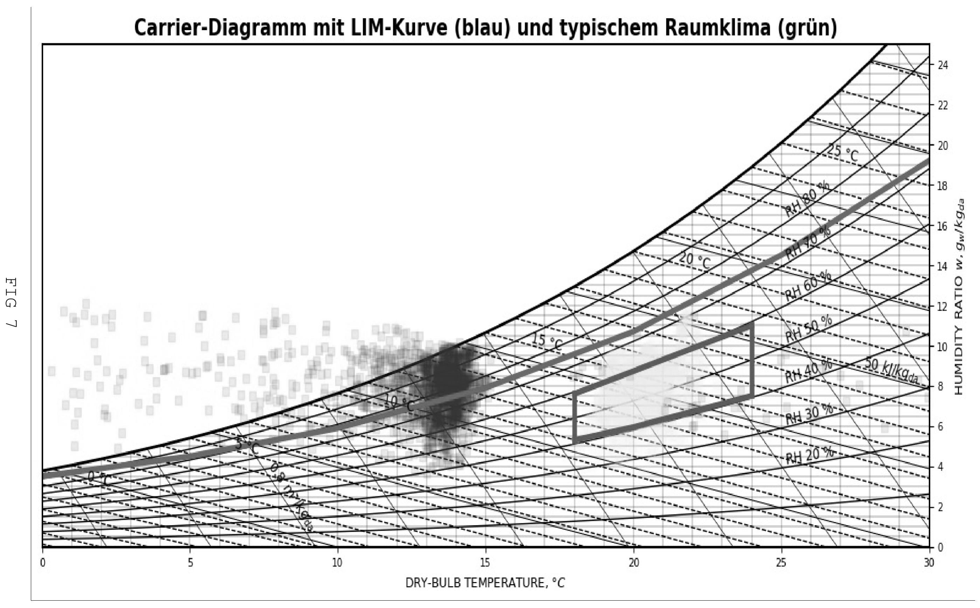

FIG 2-7 zeigen jeweils Diagramme, in denen auf der x-Achse die Raumlufttemperatur (Dry-Bulb Temperature) und auf der y-Achse die Luftfeuchte in Gramm Wasser pro Kilogramm Trockenluft aufgetragen sind. Im Diagramm sind zudem die Linien gleicher relativer Luftfeuchtigkeit eingetragen. Weiterhin ist eine Linie eingezeichnet, die in etwa der Linie von 75% relativer Luftfeuchtigkeit entspricht, bei höheren Temperaturen jedoch etwas darunter liegt, bei niedrigeren Temperaturen darüber. Oberhalb dieser Linie liegen für die Schimmelbildung potentiell kritische Bereiche.

Im Diagramm ist ein Kasten eingezeichnet, der den Bereich typischen Raumklimas markiert. Er liegt im Bereicht von 18°C bis 24°C und zwischen 40% und 60% relativer Luftfeuchtigkeit. Im oberen linken Bereich ist zudem eine Grafik mit den derzeitigen Energieeffizienzklassen und des dazugehörigen Heizwärmebedarfes in kWh/m²a eingetragen.

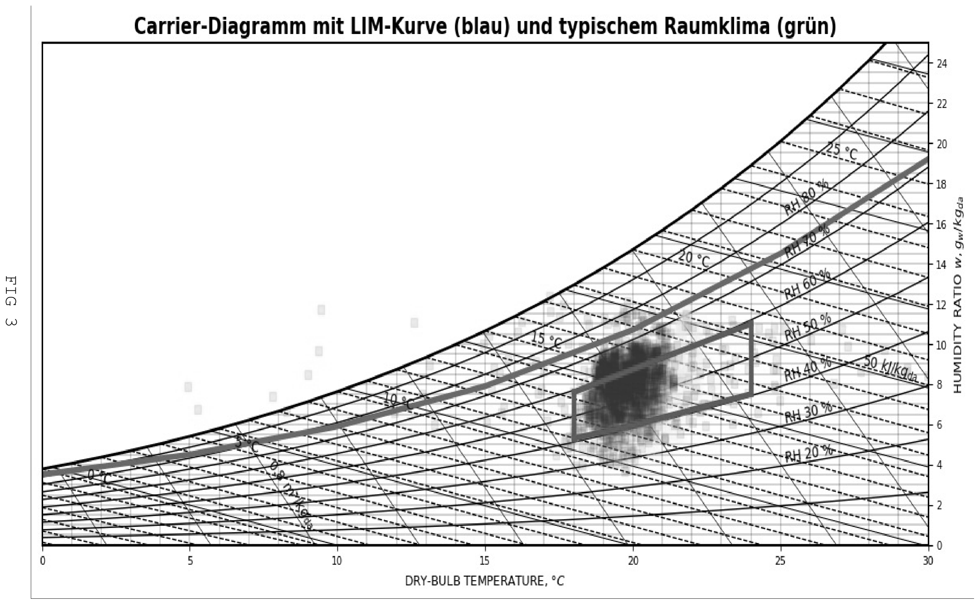

Die FIG 2 zeigt lediglich die oben genannten Grunddaten sowie einige zufällige Messwerte für Raumtemperatur und relative Raumluftfeuchtigkeit in einem Raum. Die FIG. 3-7 zeigen nun im beschriebenen Verfahren ermittelte innenseitige Wandtemperaturen und Luftfeuchtigkeiten für verschiedene Gebäude, zusammen mit deren jeweiligen Energieeffizienzklassen.

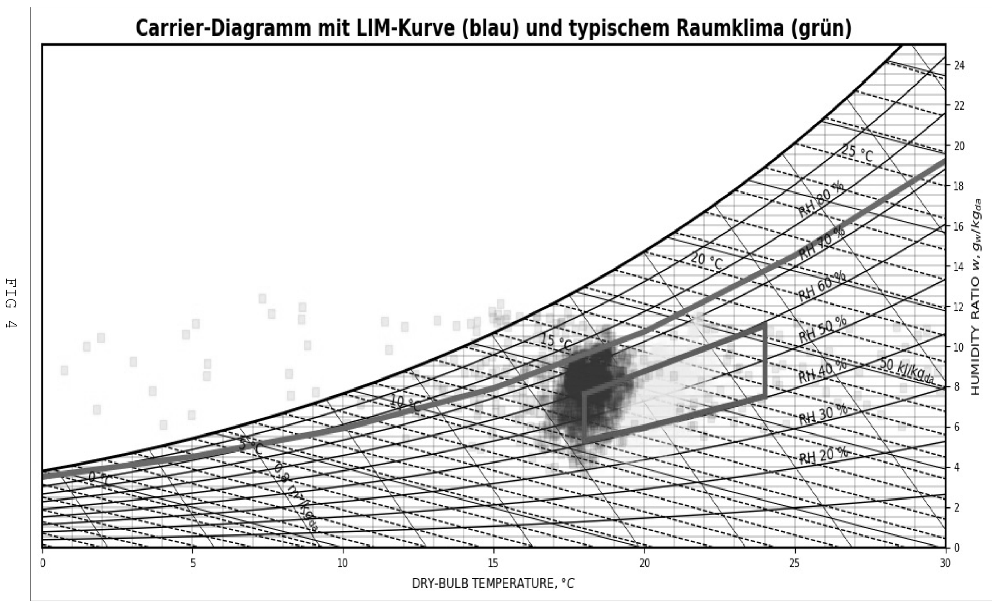

FIG 3 zeigt die ermittelten Werte für ein Gebäude der Energieeffizienzklasse A+. Hier entsprechen die innenseitigen Wandtemperaturen im Wesentlichen der Raumlufttemperatur. In FIG 4-7 sind jedoch Daten für Gebäude der Effizienzklassen B, D, F und G aufgetragen. Hier zeigt sich, dass das Modell M(T_{wi}, phi) für schlechtere Effizienzklassen immer niedrigere innenliegende Wandtemperaturen ermittelt. Hierdurch steigt die Wahrscheinlichkeit für Schimmelbildung. Dem wird durch das beschriebene Verfahren abgeholfen.

### Bezugszeichenliste

- 1: Verfahren
- 2: Messen der Raumtemperatur und relativen Raumluftfeuchtigkeit
- 4: Übertragen der Messwerte
- 6: Ermitteln des Gesamtwärmedurchgangskoeffizienten
- 8: Korrigieren des Gesamtwärmedurchgangskoeffizienten
- 10: Ermitteln der innenseitigen Wandoberflächentemperatur
- 12: Ermitteln, ob ein kritischer Zustand erreicht ist

## Patentansprüche

1. Verfahren (1) zur Ermittlung des Schimmelbildungsrisikos in Gebäuden, wobei
eine in einem Raum des Gebäudes gemessene Raumtemperatur sowie relative und/oder absolute Raumluftfeuchtigkeit bereitgestellt werden;
aus der gemessenen Raumtemperatur, der relativen und/oder absoluten Raumluftfeuchtigkeit und einer Anzahl von Umgebungs- und/oder Gebäudeparametern mittels eines bereitgestellten Modells ermittelt wird, ob ein kritischer Zustand für die Schimmelbildung erreicht ist (12).

2. Verfahren (1) nach Anspruch 1, bei dem zunächst aus der gemessenen Raumtemperatur, der relativen und/oder absoluten Raumluftfeuchtigkeit und der Anzahl von Umgebungs- und/oder Gebäudeparametern eine innenliegende Wandoberflächentemperatur ermittelt wird (10); und aus der ermittelten innenliegenden Wandoberflächentemperatur und der gemessenen relativen und/oder absoluten Raumluftfeuchtigkeit mittels des bereitgestellten Modells ermittelt wird, ob ein kritischer Zustand für die Schimmelbildung erreicht ist (12).

3. Verfahren (1) nach Anspruch 1, bei dem als Zwischenschritt zur Ermittlung der innenliegenden Wandoberflächentemperatur (10) aus der Anzahl von Umgebungs- und/oder Gebäudeparametern ein Gesamtwärmedurchgangskoeffizient für das Gebäude ermittelt wird (6);
der Gesamtwärmedurchgangskoeffizient um einen Korrekturfaktor für Lüftungsverluste korrigiert wird (8);
und
die innenliegende Wandoberflächentemperatur zumindest aus der gemessenen Raumtemperatur, der aktuellen Außentemperatur und dem korrigierten Gesamtwärmedurchgangskoeffizienten ermittelt wird (10).

4. Verfahren (1) nach einem der vorhergehenden Ansprüche, bei dem die Umgebungsparameter eines oder mehrere der Folgenden umfassen:
- Außentemperatur,
- relative Außenluftfeuchtigkeit,
- aktuelle und/oder voraussichtliche Wetterlage,
- Gradtagszahlen,
- Heizgradtage,
- Solareinstrahlung,
- Windgeschwindigkeit.

5. Verfahren (1) nach einem der vorhergehenden Ansprüche, bei dem die Gebäudeparameter eines oder mehrere der Folgenden umfassen:
- Energieverbrauch,
- spezifischer Energieverbrauch,
- Energieeffizienzklasse,
- Nutzungsgrad,
- Art des Wärmeerzeugers,
- Maß für die Gebäudekompaktheit,
- Größe der Grundfläche,
- Größe der Außenwandfläche,
- Größe der Dachfläche,
- Gebäudealter,
- Anzahl der Etagen,
- Größe der beheizten Fläche,
- Wandstärke,
- Raumtyp.

6. Verfahren (1) nach den beiden vorhergehenden Ansprüchen, bei dem bei der Ermittlung des Gesamtwärmedurchgangskoeffizienten für das Gebäude historische Daten der Umgebungsparameter und/oder historische Daten der gemessenen Raumtemperatur und/oder Gebäudeparameter verwendet werden.

7. Verfahren (1) nach einem der vorhergehenden Ansprüche, bei dem das bereitgestellte Modell ein Machine-Learning-, Deep-Learning-, heuristisches, physikalisches, mathematisches, kennfeldbasiertes Modell oder eine Kombination aus einer Anzahl der vorgenannten Modelle ist.

8. Verfahren (1) nach einem der vorhergehenden Ansprüche, bei dem das bereitgestellte Modell bei der Ermittlung, ob der kritische Zustand für die Schimmelbildung erreicht ist, aktuelle und historische Werte der innenliegenden Wandoberflächentemperatur und der gemessenen relativen und/oder absoluten Raumluftfeuchtigkeit verwendet.

9. Verfahren(1) nach dem vorhergehenden Anspruche, bei dem die aktuellen und/oder historischen Werte der innenliegenden Wandoberflächentemperatur direkt gemessene Temperaturen umfassen.

10. Verfahren (1) nach einem der vorhergehenden Ansprüche, bei dem nach dem Ermitteln des kritischen Zustands eine Warnmeldung an einen Benutzer erzeugt wird und/oder ein automatischer Eingriff auf Technik des Gebäudes mit dem Ziel der Beseitigung des kritischen Zustands erfolgt.

11. Verfahren (1) nach dem vorhergehenden Anspruch, bei dem die Warnmeldung über ein Benutzerendgerät und/oder ein im Raum angeordnetes Messgerät für die Raumlufttemperatur und/oder die relative und/oder absolute Raumluftfeuchtigkeit ausgegeben wird.

12. Verfahren (1) nach einem der vorhergehenden Ansprüche, bei dem die Schritte der Ermittlung der innenliegenden Wandoberflächentemperatur und der Ermittlung, ob ein kritischer Zustand für die Schimmelbildung erreicht ist, in einem zum Gebäude entfernten Rechenzentrum durchgeführt werden.
